Europäisches Patentamt

European Patent Office

Office européen des brevets

(19)

(11) Publication number: **0 211 099 B1**

(12) ## EUROPEAN PATENT SPECIFICATION

(45) Date of publication of the patent specification:
01.02.89

(51) Int. Cl.⁴: **G11B 23/50**

(21) Application number: **85109846.7**

(22) Date of filing: **06.08.85**

(54) **Method for lowering the frictional coefficient of the magnetic head-disk interface in a lubricated magnetic disk system and disk storage system.**

(43) Date of publication of application:
**25.02.87 Bulletin 87/9**

(45) Publication of the grant of the patent:
**01.02.89 Bulletin 89/5**

(84) Designated Contracting States:
**DE FR GB IT**

(56) References cited:
**EP-A- 0 089 451**
**EP-A- 0 135 915**
**WO-A-83/01527**

**IBM TECHNICAL DISCLOSURE BULLETIN, vol. 24, no. 2, July 1981, pages 993-994, New York, US; J.J. HAGOPIAN "Rotary burnish head and system"**

(73) Proprietor: **IBM DEUTSCHLAND GMBH, Pascalstrasse 100, D-7000 Stuttgart 80(DE)**

(84) Designated Contracting States: **DE**

(73) Proprietor: **International Business Machines Corporation, Old Orchard Road, Armonk, N.Y. 10504(US)**

(84) Designated Contracting States: **FR GB IT**

(72) Inventor: **Bandara, Upali, Dr. Dipl.-Chem., Widmaierstrasse 146, D-7000 Stuttgart 80(DE)**
Inventor: **Hinkel, Holger, Dr. Dipl.-Phys., Zeisigweg 13, D-7030 Böblingen(DE)**

(74) Representative: **Herzog, Friedrich Joachim, Dipl.-Ing., IBM Deutschland GmbH Schönaicher Strasse 220, D-7030 Böblingen(DE)**

## Description

The present invention relates to a method for lowering the frictional coefficient of the magnetic head-disk interface in a magnetic disk storage system comprising magnetic disks with lubricated surfaces and magnetic heads that are mounted on sliders which in operation of the system are supported on air cushions formed between air bearing surfaces of the sliders and the rotating disk surface, the air bearing surfaces of the magnetic head sliders being in contact with the disk surfaces during sliding phases of start/stop operations of the system. Furthermore the invention relates to a disk storage system itself.

Disk packs containing several lubricated disks and associated head/slider combinations are usually encapsulated in an enclosure. These so-called head-disk assemblies, HDA, include a closed air system in which the circulating air is filtered so that practically dust-free air is ventilated. Such disk storage systems, HDA's and air systems are e.g. described in US Patents 4 034 411, 4 190 411, 4 285 018, and IBM Technical Disclosure Bulletin Vol. 21, No. 6, November 1978, p. 2514, and IBM Technical Disclosure Bulletin Vol. 22, No. 6, November 1979, p. 2474.

Rigid disk files used for on-line storage mostly have a disk pack spinning at high speed. Depending on the application the file is designed for, the spinning speed is from 2,000 to 6,000 rpm, resulting in a 14-inch disk in a linear velocity of 33 m/sec to 100 m/sec, respectively. At 3,600 rpm it is 60 m/sec. This is 100 to 500 times faster than the tape speed in a cartridge. Contact of the head with a disk would be a disastrous event at such velocity. Therefore, contact of the head with a disk must be avoided during flight and therefore lubrication of the disk is provided, because of the required proximity of the head to the recording medium. The head is carried on the tail of sliders that are carried on air bearing surfaces of the slider which create an air cushion between the disk surface and the slider during flight. Examples for those head/slider combinations are for example shown in US Patents 3 823 416, 3 855 625, and 4 251 841.

In a disk file that is not powered the head carrying slider with its magnetic transducer head on its tail, sits on the disk. When the disks start to rotate the slider glides in contact with a disk surface until the take-off speed is reached. It will not reach stable flight immediately but contacts the disk several times, causing hopping. Similar dynamic interaction of the slider will happen upon landing when the system is turned off. To minimize friction during these start/stop operations this tribological system is provided with a lubricant.

Lubrication is generally done by applying oil to the disk. Such oil layer must be thin enough not to impede the flight by accumulation, not to mix with dust or debris, and not to transfer in a large amount to the slider and head. It must be easily applicable and remain on the disk surface over the lifetime of the system. That means it must wet the recording medium or be chemically attached, it must not form droplets (autophobia) and be spun off. Furthermore it must not change viscosity, nor cause the slider to stick to the disk at its rest position. If stiction occurs the retaining forces can be strong enough to cause permanent distortion and damages of the head suspension. Such incidence can also cause the slider to damage the magnetic layer and generate debris. Due to the air circulation within the head-disk assembly the debris can be transferred to other disks and will obstruct proper flying of the head and cause damage with subsequent head crash.

These described interactions of the slider with a head and the surface of the disks on the other side, the behaviour of the head-disk interface, are the most frequently occurring incidents that put a disk file out of action. Contrarily, there are extremely few incidents that render a disk file unusuable due to other malfunctions of the magnetic heads or disks themselves, e.g. for environmental circumstances. Almost all incidents occur as a consequence of the tribological system slider-head, lubricant, magnetic medium under the extreme forces and circumstances mentioned above. It has been found out that lubrication does not solve all problems to increase the lifetime of a disk storage system or diminish wear. There do exist head-disk interface problems, be it stiction to the disk, that means the slider sticks in its rest position to the disk, or be it friction during starting and stop procedures between head and disk, or be it depletion of lubricant, or be it debris, all those problems lead to possible head crashes and to lifetime diminishing. One of the causes of these problems seems to be humidity and its influence on the lubricant.

In an article "Stiction at The Winchester Head-Disk Interface" by Chin C. Liu and Peter B. Mee, published in IEEE Transactions on Magnetics, Vol. MAG-19, No. 5, September 1983, pp. 1659–61, this problem is described. In accordance with this article stiction was found experimentally to be very sensitive to the humidity of the environment. The texture of the disk surface, the slider loading, lubricant thickness, water adsorption, susceptibility of the disk surface, the purging process and water-lubricant interaction were all considered as important parameters for stiction initiation. It was found that a water drop can diffuse through the lubricant layer and displace the lubricant from the disk surface by lateral advance. During the drying process, the surface tension of the thin water film will pull the two solid surfaces together and produce deformation at the areas of actual contact. The thinner the film thickness, the higher the adhesion force which will be produced. The magnitude of stiction thus depends on the amount of water condensation, the degree of water diffusion through the lubricant films and the amount of lubricant replaced by water molecules at the contact area. In the case of a severe stiction, a solid-solid junction could be formed.

The present invention as claimed in the attached claims solves the above mentioned problems in a very simple and advantageous manner and drastically improves the lifetime of magnetic disk storage systems.

In accordance with the present invention, a pre-treatment of the head-disk assemblies is provided by running them in such a manner that there is sliding contact between slider and disk at a low velocity of e.g. 200 to 400 rpm for a relatively short period of time, e.g. 1 to 4 minutes, in a dry atmosphere, e.g. dry air or $N_2$ with a relative humidity of less than 1%.

The advantages offered by the invention and the pre-treatment method is that the frictional coefficient and the triboelectric current are drastically reduced in a very simple manner and that thus the lifetime of magnetic disk storages so treated is increased enormously.

Details of the invention and further advantages will be described in connection with the accompanying drawing in which

Fig. 1 shows a diagram of the friction force and of the triboelectric current over the time of a head-disk interface running in a dry $N_2$ atmosphere, the pre-conditioning phase, and

Fig. 2 shows diagrams of friction force and triboelectric current of a head-disk interface running in normal air without and with having had the pre-conditioning phase of Fig. 1.

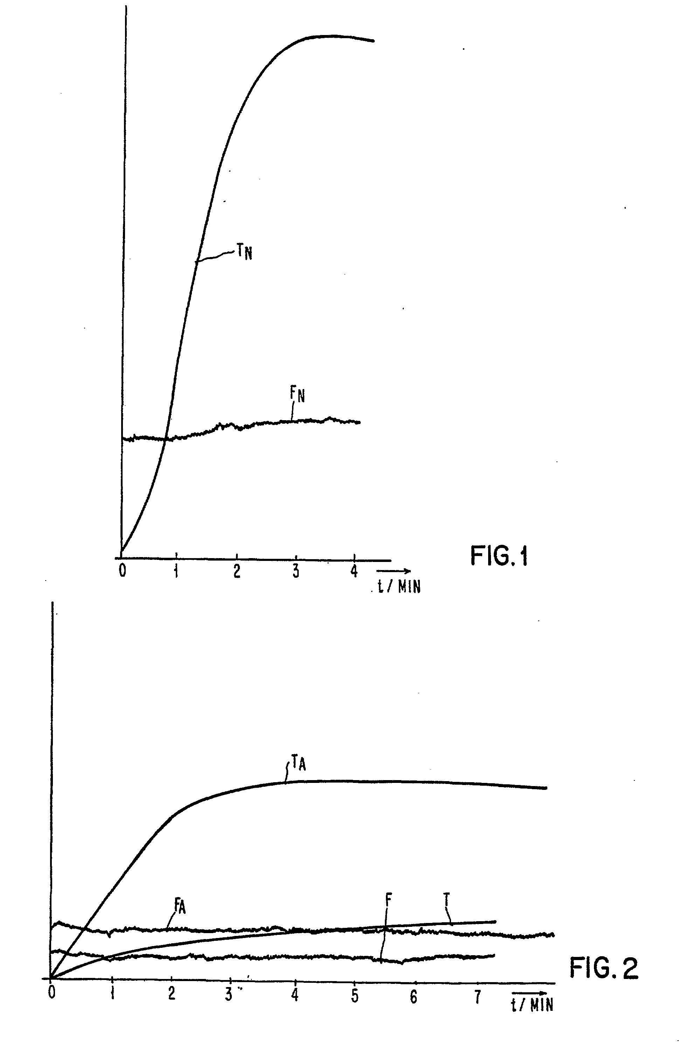

Figs. 1 and 2 show in equal scale two important parameters as a function of time. Those parameters are friction F and triboelectric current T which exist between the head carrying slider and the disk surface when the slider is in frictional sliding contact with the disk surface.

The plot of Fig. 1 shows the dependence of triboelectric current $T_N$ and friction $F_N$ in dry nitrogen $N_2$. The plot is shown for a 4 minute lasting sliding contact between slider and disk surface at a velocity of about 200 to 400 rpm. The triboelectric current $T_N$ that is generated in this head-disk interface and flows between slider and disk, increases very rapidly and reaches a saturation after about 3 minutes.

The triboelectric current has been found to be a measure for the behaviour of the head-disk interface system. So the triboelectric current usually decreases when the slider takes off at about 800 to 1,000 rpm during starting the HDA. If during normal disk operation triboelectric current is observed a disk failure can be predicted to happen in a very short period of time. It might also be that the triboelectric current is detrimental to the lubricant and thus in a way contributes to shortening the lifetime of HDA's.

Head-disk assemblies HDA's being pre-conditioned in dry $N_2$ and operated afterwards in normal air with e.g. 45% RH, relative humidity, show a much lower triboelectric current T and friction F. This is plotted in Fig. 2. The two lower triboelectric current and friction curves show these values after the pre-conditioning phase for which Fig. 1 shows the friction and current values $F_N$ and $T_N$. For purposes of comparison in Fig. 2 the friction $F_A$ and the triboelectric current $T_A$ are shown for a head-disk assembly that has not been pre-conditioned.

As can be seen from Fig. 2, the value of friction F of a pre-conditioned HDA is about 30 to 50% smaller than the friction value $F_A$ of a HDA not pre-conditioned in accordance with the present invention.

Also, as can be seen from Fig. 2, the triboelectric current T of a pre-conditioned head-disk assembly HDA is much lower, only about 30 percent of the triboelectric current $T_A$ of a head-disk assembly that is run in normal air of about 45% RH and that is not being pre-conditioned in accordance with the present invention.

Experiments under comparable conditions with running head-disk assemblies in dry argon, dry $O_2$, in dry synthetic air at various values of relative humidity, RH 0% to 90% revealed that the humidity is the most relevant parameter. It influences both the triboelectric current T and the frictional coefficient F.

Surprisingly it has been found that a pre-run for several minutes in a dry gas atmosphere, regardless of the type of gas, having less than 1% RH, at a low velocity so that the slider slides on the disk surface, drastically improves both triboelectric current as well as friction values of these head-disk assemblies when they are later operated in normal environment, that means in air having about 45% RH.

A simple flooding of HDA's without sliding contact between head carrying slider and disk surface does not bring this result. Also a continuous operation of head-disk assemblies in dry air is not suited as the frictional force in this atmosphere is rather high.

The experiments showing the surprising results of the pre-conditioning in accordance with the invention were made with sliders made from a ceramic mixture of TiC and $Al_2O_3$, about 20 to 40% TiC and 60 to 80% $Al_2O_3$, and particulate magnetic disks containing magnetic particles such as $\gamma$-$Fe_2O_3$ particles, in a phenolic binder system. Also after more than 2 hours sliding test which corresponds to about 25% of the systems lifetime, no increase of frictional coefficient and triboelectric current were observed.

The pre-run or pre-conditioning of a HDA can be performed as follows: A newly produced and assembled head-disk assembly is flooded with dry gas of less than 1% RH, preferably nitrogen $N_2$. The disk pack is rotated at 200 to 400 rpm so that the sliders remain in sliding contact with the disk surfaces and slide on them. The head carrying sliders are swept by the access device over the entire magnetically active disk surface so that each track is pre-conditioned. Thus the entire surface is pre-conditioned. The time for running on each track is appropriately chosen so that the wanted effect is ensured. As shown, a time of 1 to 4 minutes has proved adequate. At the end of the pre-conditioning phase the dry gas is removed. Normal air with about 45% RH is flooded and then used in the operating of the system.

The pre-conditioning in accordance with the present invention can be performed with special heads that are later on not used in the head-disk assembly. The pre-conditioning can also be performed with those heads that are later on used in the system of this special disk file. The latter case makes the application of the pre-conditioning certainly much easier.

By the inventive pre-conditioning an increased lifetime of head-disk assemblies is ensured. Furthermore a diminished sensitivity relative to variations of production parameters is achieved.

## Claims

1. Method for lowering the frictional coefficient of the magnetic head-disk interface in a magnetic disk storage system comprising magnetic disks with lubricated surfaces and magnetic heads that are mounted on sliders, said sliders in operation of said system being supported on air cushions formed between air bearing surfaces of said sliders and the rotating disk surface, said air bearing surfaces of said magnetic head sliders being in contact with said disk surfaces during sliding phases of start/stop operations of said system, characterized in that said system is conditioned by

a) rotating said disks at a low rotational velocity so that the sliders slide on their associated disk surface,

b) performing said rotating in an atmosphere of dry gas;

c) performing said rotating for an appropriate period of time; and

d) sweeping said magnetic head/slider combination over all tracks of the disk surface during said rotating, so that the complete recording surface of said system is conditioned by said sliding rotating.

2. The method of claim 1, wherein said rotating is performed at about 200 to 400 revolutions per minute.

3. The method of claim 1 or 2 wherein said appropriate period of time for said rotating is about 1 to 4 minutes.

4. The method of claim 1, 2, or 3, wherein as dry gas nitrogen ($N_2$) or dry air is used.

5. The method of claim 1 or one of the claims 2 to 4, wherein
said conditioning is performed as a pre-conditioning in the beginning of the lifetime of said system.

6. Magnetic disk storage system comprising lubricated magnetic disk surfaces and magnetic heads mounted on sliders, wherein said sliders during operation of said system are supported on an air cushion formed between air bearing surfaces of said sliders and said rotating lubricated disk surfaces, and wherein said sliders are sliding on and are in contact with said lubricated disk surfaces during start/stop operations of said system, characterized in that said system has been conditioned by

a) the rotating of said disks at a relative low rotational velocity so that there is sliding contact between said sliders and their associated disk surfaces,

b) the performing of said rotating in an atmosphere of dry gas,

c) the performing of said rotating for an appropriate period of time, and

d) the fact that said sliding contact between said sliders and said associated surfaces during said rotating covers the entire recording surface of said system.

7. System of claim 6, wherein said magnetic disks are particulate disks comprising magnetic particles embedded in a cured binder material on a rigid substrate, and said sliders are made from a ceramic material comprising aluminium oxide ($Al_2O_3$) and titanium carbide (TiC).

8. System of claim 6 or 7, wherein said rotating is performed at about 200 to 400 revolutions per minute.

9. System of claim 6, 7 or 8, wherein said appropriate period of time for said rotating is about 1 to 4 minutes.

10. System of any one of the claims 6 to 9, wherein the conditioning is performed in dry air or nitrogen.

## Patentansprüche

1. Verfahren zum Reduzieren des Reibungskoeffizienten der Grenzfläche zwischen Magnetkopf und Platte in einem magnetischen Plattenspeichersystem, mit Magnetplatten mit geschmierten Oberflächen sowie mit auf Flugkörpern montierten Magnetköpfen, wobei die Flugkörper während des Betriebs des Systems auf Luftkissen zwischen den Gleitkufen der Flugkörper und der rotierenden Plattenoberfläche ruhen, und wobei die Gleitkufen der Magnetkopf-Flugkörper während der Gleitphasen des Start/Stop-Betriebes des Systems sich mit den Plattenoberflächen in Kontakt befinden, dadurch gekennzeichnet, daß das System durch folgende Schritte konditioniert wird:

a) Rotieren der Platten mit niedriger Rotationsgeschwindigkeit, so daß die Flugkörper auf ihrer zugeordneten Plattenoberfläche gleiten,

b) Ausführen der Rotation in einer Atmosphäre von trockenem Gas,

c) Ausführen der Rotation während einer angemessenen Zeitspanne; sowie

d) Bewegen der Kombination aus Magnetkopf und Flugkörper über alle Spuren der Plattenoberfläche während der Rotation, so daß die gesamte Aufzeichnungsoberfläche des Systems durch die Gleitrotation konditioniert wird.

2. Verfahren nach Anspruch 1, bei dem die Rotation mit ca. 200 bis 400 Umdrehungen pro Minute stattfindet.

3. Verfahren nach Anspruch 1 oder 2, bei dem die angemessene Zeitspanne für die Rotation ca. 1 bis 4 Minuten beträgt.

4. Verfahren nach Anspruch 1, 2 oder 3, bei dem als trockenes Gas Stickstoff ($N_2$) oder trockene Luft verwendet wird.

5. Verfahren nach Anspruch 1 oder einem der Ansprüche 2 bis 4, bei dem die Konditionierung als eine Vorkonditionierung zu Beginn der Inbetriebnahme des Systems vorgenommen wird.

6. Magnetisches Plattenspeichersystem mit geschmierten Magnetplattenoberflächen sowie auf Flugkörpern montierten Magnetköpfen, wobei die Flugkörper während des Betriebs des Systems auf einem Luftkissen zwischen den Gleitkufen der Flugkörper und den rotierenden, geschmierten Plattenoberflächen ruhen, und wobei die Flugkörper während des Start/Stop-Betriebs des Systems auf den geschmierten Plattenoberflächen gleiten oder sich mit denselben in Kontakt befinden, dadurch gekennzeichnet, daß das System durch folgende Schritte konditioniert wurde:

 a) Rotieren der Platten mit einer relativ niedrigen Rotationsgeschwindigkeit, so daß zwischen den Flugkörpern und ihren zugeordneten Plattenoberflächen Gleitkontakt besteht,

 b) Ausführen der Rotation in einer Atmosphäre aus trockenem Gas,

 c) Ausführen der Rotation während einer angemessenen Zeitspanne, und

 d) dadurch, daß der Gleitkontakt zwischen den Flugkörpern und den zugeordneten Oberflächen während der Rotation die gesamte Aufzeichnungsfläche des Systems abdeckt.

7. System nach Anspruch 6, bei dem die Magnetplatten Partikularplatten mit magnetischen Partikeln sind, welche in einem gehärteten Bindemittel auf einem starren Substrat eingebettet sind, und bei dem die Flugkörper aus einem keramischen Material bestehen, welches Aluminiumoxid (Al₂O₃) und Titaniumcarbid (TiC) enthält.

8. System nach Anspruch 6 oder 7, bei dem die Rotation mit ca. 200 bis 400 Umdrehungen pro Minute ausgeführt wird.

9. System nach Anspruch 6, 7 oder 8, bei dem die angemessene Zeitspanne für das Rotieren ca. 1–4 Minuten beträgt.

10. System nach einem der Ansprüche 6 bis 9, bei dem die Konditionierung in trockener Luft oder Stickstoff stattfindet.

## Revendications

1. Procédé de réduction du coefficient de frottement de l'interface tête magnétique-disque dans un système de mémoire à disques magnétiques comprenant des disques magnétiques avec des surfaces lubrifiées et des têtes magnétiques qui sont montées sur des coulisseaux, lesdits coulisseaux lors du fonctionnement dudit système étant supportés par des coussins d'air formés entre des surfaces de palier à air desdits coulisseaux et la surface de disque rotatif, lesdites surfaces de palier à air desdits coulisseaux de têtes magnétiques étant en contact avec lesdites surfaces de disques pendant les phases de glissement des opérations de marche/arrêt dudit système, caractérisé en ce que ledit système est conditionné par

 a) la rotation desdits disques à une faible vitesse de rotation de sorte que les coulisseaux glissent sur leur surface de disque associée,

 b) l'accomplissement de ladite rotation dans une atmosphère de gaz sec;

 c) l'accomplissement de ladite rotation pendant une période de temps appropriée; et d) le balayage de ladite combinaison tête magnétique/coulisseau sur toutes les pistes de la surface de disque pendant ladite rotation, de sorte que toute la surface d'enregistrement dudit système est conditionnée par ladite rotation de glissement.

2. Procédé de la revendication 1, dans lequel ladite rotation est effectuée à environ 200 à 400 tours par minute.

3. Procédé de la revendication 1 ou 2, dans lequel ladite période de temps appropriée pour ladite rotation est de 1 à 4 minutes environ.

4. Procédé de la revendication 1, 2 ou 3, dans lequel on utilise comme gaz sec, de l'azote (N₂) ou de l'air sec.

5. Procédé de la revendication 1 ou de l'une des revendications 2 à 4, dans lequel ledit conditionnement est effectué comme un préconditionnement au début de la durée de vie dudit système.

6. Système de mémoire à disques magnétiques comprenant des surfaces de disques magnétiques lubrifiées et des têtes magnétiques montées sur des coulisseaux, dans lequel lesdits coulisseaux pendant le fonctionnement dudit système sont supportés par un coussin d'air formé entre les surfaces de palier à air desdits coulisseaux et lesdites surfaces de disques lubrifiées rotatives, et dans lequel lesdits coulisseaux glissent sur et sont en contact avec lesdites surfaces de disques lubrifiées pendant les opérations de marche/arrêt dudit système, caractérisé en ce que ledit système a été conditionné par

 a) la rotation desdits disques à une vitesse de rotation relativement faible de sorte qu'il y a un contact de glissement entre lesdits coulisseaux et leurs surfaces de disque associées,

 b) l'accomplissement de ladite rotation dans une atmosphère de gaz sec,

 c) l'accomplissement de ladite rotation pendant une période de temps appropriée, et d) le fait que ledit contact de glissement entre lesdits coulisseaux et leurs surfaces associées pendant ladite rotation couvre toute la surface d'enregistrement dudit système.

7. Système de la revendication 6, dans lequel lesdits disques magnétiques sont des disques particulaires comprenant des particules magnétiques enrobées dans un matériau liant traité sur un substrat rigide, et lesdits coulisseaux sont faits d'un matériau céramique comprenant de l'oxyde d'aluminium (Al₂O₃) et du carbure de titane (TiC).

8. Système de la revendication 6 ou 7, dans lequel ladite rotation est effectuée à environ 200 à 400 tours par minute.

9. Système de la revendication 6, 7 ou 8, dans lequel ladite période de temps appropriée pour ladite rotation est d'environ 1 à 4 minutes.

10. Système de l'une quelconque des revendications 6 à 9, dans lequel le conditionnement est effectué dans l'air sec ou dans l'azote.

FIG.1

FIG.2